# EUROPEAN PATENT SPECIFICATION

(11) **EP 3 961 404 B1**
(45) Date of publication and mention of the grant of the patent: **06.09.2023**
(21) Application number: 21182323.2
(22) Date of filing: 29.06.2021
(51) Int. Cl.: G06F 11/34, H04L 9/32, G06F 11/36, G06F 11/30, H04L 9/00

(54) **METHOD, SYSTEM, AND APPARATUS FOR MONITORING BLOCKCHAIN SMART CONTRACT**
VERFAHREN, SYSTEM UND VORRICHTUNG ZUR ÜBERWACHUNG EINES BLOCKCHAIN-SMART-CONTRACT
PROCÉDÉ, SYSTÈME ET APPAREIL POUR LA SURVEILLANCE DE CONTRAT INTELLIGENT DE CHAÎNE DE BLOCS

(30) Priority: 28.08.2020 CN 202010888045
(43) Date of publication of application: 02.03.2022
(73) Proprietor: Alipay (Hangzhou) Information Technology Co., Ltd., Hangzhou, Zhejiang 310000 (CN)
(72) Inventor: ZHANG, Cheng, Hangzhou, 310000 (CN); GUO, Xuepeng, Hangzhou, 310000 (CN); TIAN, Shikun, Hangzhou, 310000 (CN)
(74) Representative: Goddar, Heinz J.

(56) References cited:
- CN-A- 109 542 589
- CN-A- 110 633 200
- US-A1- 2018 218 176
- US-A1- 2019 392 178

## Description

### TECHNICAL FIELD

This specification relates to the field of blockchain technologies, and in particular, to a method, a system, and an apparatus for monitoring a blockchain smart contract.

### BACKGROUND

In recent years, as blockchain smart contract technologies become increasingly mature, logic in a contract is increasingly complex. When the contract runs abnormally, a monitoring and alarm mechanism is required to find a problem in time, and further optimize the more complex contract efficiently. Therefore, monitoring a running status of a smart contract on a blockchain node is particularly important.
US 2019/392178 A1 relates to a method and system for monitoring a smart contract on a distributed ledger.

### SUMMARY

The invention is defined in the independent claims. Advantageous modifications are set forth in the dependent claims. Any examples and technical descriptions of apparatuses, products and/or methods in the description and/or drawings not covered by the claims are presented not as embodiments of the invention but as background art or examples useful for understanding the invention.

An embodiment of this specification provides a method for monitoring a blockchain smart contract. The method includes: running a smart contract deployed on a blockchain node, the smart contract including an interface used for acquiring running data; and obtaining running data acquired by the interface during the running of the smart contract, the running data being processed for performing at least one of the following operations on the smart contract: running status monitoring or performance analysis.

An embodiment of this specification provides a system for monitoring a blockchain smart contract. The system includes: a running module, configured to run a smart contract deployed on a blockchain node, the smart contract including an interface used for acquiring running data; and an obtaining module, configured to obtain running data acquired by the interface during the running of the smart contract, the running data being processed for performing at least one of the following operations on the smart contract: running status monitoring or performance analysis.

An embodiment of this specification provides an apparatus for monitoring a blockchain smart contract. The apparatus includes a processor being used to perform a method for monitoring a blockchain smart contract.

### BRIEF DESCRIPTION OF THE DRAWINGS

This specification is further described in a form of exemplary embodiments, and the exemplary embodiments are described in detail with the accompanying drawings. The embodiments are not restrictive. In the embodiments, the same number represents the same structure.
FIG. 1 is a schematic diagram of an application scenario of a blockchain system according to some embodiments of this specification;
FIG. 2 is an exemplary flowchart of a method for monitoring a blockchain smart contract according to some embodiments of this specification; and
FIG. 3 is a module diagram of a system for monitoring a blockchain smart contract according to some embodiments of this specification.

### DETAILED DESCRIPTION

To describe technical solutions in embodiments of this specification more clearly, the following briefly describes the accompanying drawings required for describing the embodiments. Apparently, the accompanying drawings in the following description show only some examples or embodiments of this specification, and for a person of ordinary skill in the art, this specification may further be applied to other similar scenarios according to these accompanying drawings without creative efforts. Unless obvious from a language environment or otherwise described, the same reference number in the figures represents the same structure or operation.

It should be understood that terms "system", "apparatus", "unit", and/or "module" used herein are used for distinguishing different components, elements, members, parts, or assemblies of different levels. However, if other words can achieve the same purpose, the terms can be replaced by other expressions.

As shown in this specification and the claims, words such as "a/an", "one", "one kind", and/or "the" do not refer specifically to singular forms and may also include plural forms, unless the context expressly indicates an exception. In general, terms "comprise" and "include" merely indicate including clearly identified steps and elements. The steps and elements do not constitute an exclusive list. A method or a device may also include other steps or elements.

Flowcharts are used in this specification for illustrating operations performed by the system according to the embodiments of this specification. It should be understood that the foregoing or following operations are not necessarily performed in an exact order. On the contrary, the steps may be performed in a reverse order or simultaneously. In addition, other operations may be added to the processes, or one or more operations may be removed from the processes.

At present, most of monitoring technologies of existing blockchains are aimed at blockchain nodes, for example, monitoring whether a blockchain node generates a block, or monitoring whether a blockchain node is abnormal. Running data (for example, at least one of an instantaneous value, a count value, a calculation event rate, a histogram, a timer, an average value, and a health check result when the smart contract is executed) in the blockchain smart contract is not monitored. With the advancement of blockchain technologies, internal logic of a smart contract currently is becoming more complex. Therefore, it is often necessary to optimize complex smart contracts, and it is inevitable to monitor running time consumption, data throughputs, and other information in running data in the smart contracts.

In the technical solutions disclosed in this specification, interfaces for data acquisition may be added to a smart contract, to obtain running data of the smart contract by invoking functions or programs corresponding to the interfaces during running of the smart contract. The smart contract can be monitored based on the running data.

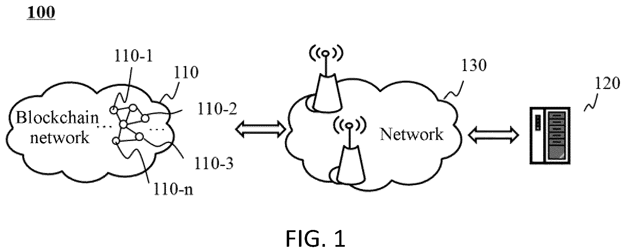

FIG. 1 is a schematic diagram of an application scenario of a blockchain system according to some embodiments of this specification. As shown in FIG. 1, the system 100 may include a blockchain network 110, a processing device 120, and a network 130.

The blockchain network 110 may maintain a growing list of transaction records by using a decentralized, distributed, and public digital ledger. In some embodiments, the blockchain network 110 may be any type of blockchain network, for example, a public blockchain network, a private blockchain network, a semi-private blockchain network, a consortium blockchain, or any combination thereof. In some embodiments, the blockchain network 110 may be a consortium blockchain. In the consortium blockchain, a consensus process is controlled by a set of pre-selected nodes, and a right to read a blockchain may be public or limited to the one or more pre-selected nodes.

The blockchain network 110 may include a plurality of nodes such as a node 110-1, a node 110-2, a node 110-3, ..., and a node 110-n. The node may receive a transaction uploaded (broadcast) to the blockchain network 110, and generate a new block based on transactions received within a period of time. The transaction may be used for recording an event/behavior that occurs in the blockchain system, for example, a transaction used for recording deployment of a smart contract, or a transaction used for recording invocation of a smart contract. Each node (which may be referred to as a consensus node/full node) runs a consensus mechanism, so that a transaction to be executed by each consensus node (which may be referred to as an accounting node) is consistent. A contract-related transaction may be executed by each consensus node by using a virtual machine based on blockchain standards, for example, a Java virtual machine (JVM) of an Ethereum, or a virtual machine based on a WebAssembly (WASM) standard. The virtual machines running on the nodes execute the contract-related transactions to ensure that execution results of the contract-related transactions on the nodes are consistent. The transaction executed on the consensus node may also include an ordinary transfer transaction. For such transactions, blockchain platform code executed by each consensus node individually ensures consistency of transaction execution results. Consistency of the transactions, consistency of statuses before execution of the transactions, consistency of statuses generated by execution results, and consistency of receipts ultimately ensure that blocks generated by the consensus nodes are consistent, so that all nodes jointly maintain the same blockchain.

A smart contract developer can write a smart contract according to requirements. After the smart contract is compiled by a virtual machine, a transaction for creation of the smart contract may be initiated. A node may receive the transaction that includes creation of the smart contract, and store the received smart contract after running a consensus mechanism to implement deployment of the smart contract. After the smart contract is successfully deployed, the node may receive a transaction from the invoked smart contract, and execute (invoke) the deployed smart contract. In some embodiments, when writing a smart contract, the smart contract developer may deploy, in the smart contract, an interface used for acquiring running data of the contract, to obtain a running status of the smart contract in a timely and convenient manner. In some embodiments, during execution of the smart contract by a blockchain node, running data of the contract may be acquired by using the interface, and the running data is sent to the processing device 120 for subsequent processing.

The processing device 120 may be integrated on the node in the blockchain network 110, or a device outside the blockchain network 110. The processing device 120 can process and analyze running data of contracts from one or more blockchain nodes, to obtain a comprehensive evaluation result of the smart contract. The processing device 120 may include various types of computing devices such as a laptop computer, a desktop computer, and a server. The server may be an independent server or a server group, and the server group may be centralized or distributed. In some embodiments, the server may be regional or remote. In some embodiments, the server may be executed on a cloud platform. For example, the cloud platform may include one or any combination of a private cloud, a public cloud, a hybrid cloud, a community cloud, a decentralized cloud, and an internal cloud.

The network 130 is connected to various components of the system, so that the various components can communicate with each other. The network between various parts in the system may include a wired network and/or a wireless network. For example, the network 130 may include a cable network, a wired network, a fiber optic network, a telecommunication network, an internal network, the Internet, a local area network (LAN), a wide area network (WAN), a wireless local area network (WLAN), a metropolitan area network (MAN), and a public switched telephone network (PSTN), a Bluetooth network, a Zigbee network, a near field communication (NFC), a device bus, a device line, a cable connection, or any combination thereof. A network connection between every two parts may be in one or more of the foregoing manners. It may be understood that the network 130 and the blockchain network 110 do not necessarily have an obvious boundary. In a more general application scenario, the blockchain nodes and ordinary network nodes can be connected to the same physical network, where the blockchain nodes logically constitute a blockchain network.

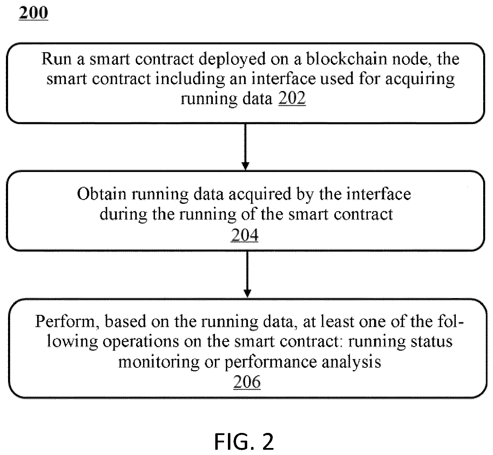

FIG. 2 is an exemplary flowchart of a method for monitoring a blockchain smart contract according to some embodiments of this specification. In some embodiments, a procedure 200 may be performed by a system 300 for monitoring a smart contract. For example, the procedure 200 may be stored in a storage apparatus (for example, a built-in storage unit of a node or an external storage device) in a form of a program or instructions. When the program or the instructions is or are executed, the procedure 200 can be implemented. As shown in FIG. 2, the procedure 200 may include the following steps.

Step 202. Run a smart contract deployed on a blockchain node, the smart contract including an interface used for acquiring running data. This step may be performed by a running module 310.

In some embodiments, the smart contract may be stored on a node in a blockchain platform, and is developed and deployed by a contract developer. In an example, a blockchain platform (for example, a consortium blockchain) can provide a series of contract application programming interfaces (APIs) to help the contract developer develop smart contract with richer functions, and further add preset functions for contract execution. For example, in a process of writing a smart contract in a high-level language, a user may add a statement for invoking the API before and/or after a statement that needs the smart contract corresponding to a monitoring status. The contract developer may send a transaction that includes creation of the smart contract to a blockchain. After a consensus is reached, a virtual machine (EVM/WASM) of the blockchain node may execute the transaction and generate a corresponding contract instance. After the contract is created, a contract account corresponding to the smart contract appears on the blockchain and has a specific address. Contract code and account storage are stored in the contract account. A behavior of the smart contract is controlled by the contract code, and the account storage of the smart contract saves a status of the contract. In other words, the smart contract enables a virtual account including the contract code and the account storage to be generated on the blockchain. The contract code of the smart contract may be bytecode. The bytecode includes a series of bytes, and each byte can identify one operation. The contract developer may write the bytecode directly or indirectly (for example, write smart contract code by using a high-level language such as a Solidity language, a Serpent language, or an LLL language). The smart contract code written indirectly is compiled by a compiler to generate bytecode, and then the bytecode may be deployed on the blockchain. Therefore, when developing the smart contract, the developer can integrate the API provided by the blockchain platform into the smart contract. For example, a function name of the API is written into the contract. After the smart contract is deployed, when a specific trigger condition is satisfied (for example, the user initiates a transaction that invokes a specific smart contract), a corresponding blockchain node can execute the corresponding smart contract by using a virtual machine on the blockchain node. Generally, the blockchain node may load the bytecode of the contract from the storage into the virtual machine according to an address of the contract. Further, the bytecode may be interpreted and executed by an interpreter, including, for example, parsing bytecode of an invoked contract, to obtain operation codes. The operation codes are stored in a memory of the virtual machine, and a name of an invoked function may further be obtained. After costs (Gas) required to execute the contract are calculated, and when the costs are adequate, the blockchain node jumps to a corresponding address of the memory to obtain the operation code of the invoked function and start execution. Subsequently, operations such as computation and pushing into/out of a stack may be performed on data operated by the operation code of the invoked function, to complete data computation.

In some embodiments, when writing the smart contract, the developer may write an API for obtaining running data of the contract in contract code, so that when the contract is executed, a corresponding function or program can be invoked to obtain the running data of the contract. Some APIs may be integrated into the blockchain platform code as library functions. The integrated library functions may have a duplication in the virtual machine, so that the APIs can be invoked when the contract is executed in the virtual machine. In some embodiments, the API for obtaining the running data of the contract may include a Metrics (a metric library for monitoring indicators) interface. The Metrics may include metrics tools such as a gauge (instantaneous value), a count (counter), a meter (calculation event rate), a histogram (providing statistics for a data flow), a timer, and an average (average value), and a function of health check. Correspondingly, when the Metrics interfaces are invoked, an instantaneous value, a count value, a calculation event rate, a histogram, a timer, an average value, and a health check result when the smart contract is executed may be obtained.

In some embodiments, the API provided by the blockchain platform may include a contract API for monitoring or acquiring the running data of the contract, for use by the developer when writing the smart contract, or the developer can customize a program interface used for acquiring the running data of the contract, to achieve customized monitoring of the running data.

For example, a function "metrics_count_add" may be provided, which may be a pointer function related to a counter. When the smart contract is executed by the virtual machine, a counting function of the count is automatically started, so that a quantity of times a specific function or statement has been executed can be counted.

In another example, an API for recording a time may be provided. In this way, the API is set before and after one/several statements or functions of the contract to record a first time and a second time. In this way, when the smart contract is parsed and executed by the virtual machine, the API may be invoked to capture a time difference between the second time and the first time, so that a time consumed for running can be obtained.

Step 204. Obtain running data acquired by the interface during the running of the smart contract. This step may be performed by an obtaining module 320.

Based on interfaces for acquiring the running data added during development of the smart contract, the running data of the smart contract can be acquired by invoking the interfaces during the running of the smart contract. In some embodiments, the running data may include a quantity of times the smart contract has been executed, a quantity of times a specific instruction in the smart contract has been executed, a time taken to execute the smart contract, or any combination thereof. Depending on content (predefined function content) of the interface (for example, the Metrics interface) added during the development of the smart contract, the running data may further include other data. Exemplarily, based on a type of the Metrics (as described above), when the Metrics interface in the smart contract is invoked, related data, for example, at least one of an instantaneous value, a count value, a calculation event rate, a histogram, a timer, an average value, and a health check result when the smart contract is executed may be obtained and specified as the content in the running data.

In some embodiments, in order to obtain the running data, the obtaining module 320 may be configured to read, by using a monitoring component, the running data acquired by the interface during the running of the smart contract. The monitoring component may be installed on the blockchain node, and may collect the running data generated during the running of the smart contract. In some embodiments, the monitoring component may be constructed based on a Prometheus protocol. In an example, the monitoring component may be a C++ client developed based on the Prometheus protocol.

Step 206. Perform, based on the running data, at least one of the following operations on the smart contract: running status monitoring or performance analysis.

In some embodiments, after obtaining the running data, a transmission module 330 may be configured to transmit the running data to an analysis component, and use the analysis component to process the running data. The analysis component may be software and/or hardware that supports data of a type to which the running data belongs, and performs processing and analysis. In some embodiments, the analysis component may be deployed on the processing device 120. After the monitoring component obtains the running data, the transmission module 330 may be configured to transmit the running data to the analysis component. The analysis component can receive running data corresponding to all smart contracts that are running on the blockchain platform, and process and analyze each piece of running data. In some embodiments, the analysis component can simultaneously process running data of the same smart contract on two or more blockchain nodes, so as to learn a comprehensive running status of the smart contract.

In some embodiments, the running status monitoring may be monitoring an execution status of the smart contract according to the running data. For example, the execution status may include processing resources occupied when the smart contract is executed, whether the smart contract is executed correctly, and the like. The performance analysis may be an evaluation of the smart contract according to the running data. For example, comparison between an indicator of an execution time of the smart contract and a preset time consumption indicator may be evaluated. In some embodiments, the analysis component may be disposed outside the blockchain platform. For example, the analysis component may be an open-source tool such as a Grafana, which can display, monitor, and raise an alarm on Metrics data. Because running data generated during running of a smart contract of a node on the blockchain platform is pushed to a remote analysis component for processing and storage, a storage space of the blockchain platform can be saved while achieving monitoring and performance analysis of the smart contract. In some embodiments, the blockchain platform can push N times per second the running data of the smart contract to the analysis component for processing, to achieve second-level monitoring and performance analysis of the smart contract.

In some embodiments, the analysis component may be disposed inside the blockchain platform. For example, the analysis component may be deployed on a blockchain node to which the developer belongs (or referred to as a developer node). Running data of a smart contract of each node in the blockchain platform may be transmitted to the developer node, and processed by the analysis component. In another example, the analysis component may be deployed on any node in the blockchain platform. In another example, an analysis component is deployed on each node in the blockchain platform to process running data of a smart contract on the node. In some embodiments, the analysis component disposed in the blockchain platform may also be referred to as an execution module 340 of the system 300 for monitoring a smart contract. The execution module 340 may directly process the running data of the smart contract in the blockchain platform to implement at least one of the foregoing operations such as the running status monitoring or the performance analysis.

It should be noted that the foregoing description of the procedure 200 is merely for example and description, and is not intended to limit the scope of application of this specification. For a person skilled in the art, various modifications and changes can be made to the procedure 200 under the guidance of this specification. However, these modifications and changes still fall within the scope of this specification.

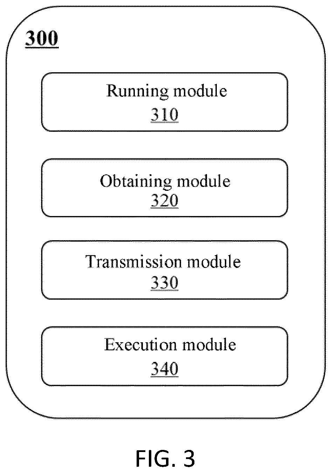

FIG. 3 is a module diagram of a system for monitoring a blockchain smart contract according to some embodiments of this specification. As shown in FIG. 3, the system for monitoring a smart contract may include a running module 310, an obtaining module 320, a transmission module 330, and an execution module 340.

The running module 310 may be configured to run a smart contract deployed on a blockchain node. The smart contract includes an interface used for acquiring running data. The smart contract may be on a node in a blockchain platform, and is developed and deployed by a contract developer. When writing the smart contract, the smart contract developer may deploy, in the smart contract, an interface used for acquiring running data of the contract, to obtain a running status of the smart contract in a timely and convenient manner. For example, in a process of writing a smart contract in a high-level language, a user may add a statement for invoking an API before and/or after a statement that needs the smart contract corresponding to a monitoring status. The contract developer may send a transaction that includes creation of the smart contract to a blockchain. After a consensus is reached, a virtual machine (EVM/WASM) of the blockchain node may execute the transaction and generate a corresponding contract instance. After the contract is created, a contract account corresponding to the smart contract appears on the blockchain and has a specific address. Contract code and account storage are stored in the contract account. A behavior of the smart contract is controlled by the contract code, and the account storage of the smart contract saves a status of the contract. In other words, the smart contract enables a virtual account including the contract code and the account storage to be generated on the blockchain. The contract code of the smart contract may be bytecode. The bytecode includes a series of bytes, and each byte can identify one operation. The contract developer may write the bytecode directly or indirectly (for example, write smart contract code by using a high-level language such as a Solidity language, a Serpent language, or an LLL language). The smart contract code written indirectly is compiled by a compiler to generate bytecode, and then the bytecode may be deployed on the blockchain. Therefore, when developing the smart contract, the developer can integrate the API provided by the blockchain platform into the smart contract. For example, after a function and an address that correspond to the API are written into the contract and the smart contract is deployed, when a specific trigger condition is satisfied (for example, the user initiates a transaction that invokes a specific smart contract), a corresponding blockchain node can execute the corresponding smart contract by using a virtual machine on the blockchain node. Generally, the blockchain node may load the bytecode of the contract from the storage into the virtual machine according to an address of the contract. Further, the bytecode may be interpreted and executed by an interpreter, including, for example, parsing bytecode of an invoked contract, to obtain operation codes. The operation codes are stored in a memory of the virtual machine, and a name of an invoked function may further be obtained. After costs (Gas) required to execute the contract are calculated, and when the costs are adequate, the blockchain node jumps to a corresponding address of the memory to obtain the operation code of the invoked function and start execution. Subsequently, operations such as computation and pushing into/out of a stack may be performed on data operated by the operation code of the invoked function, to complete data computation.

The obtaining module 320 may be configured to obtain running data acquired by the interface during the running of the smart contract. Based on interfaces for acquiring running data added during development of the smart contract, the interfaces (functions corresponding to APIs) may be invoked during the running of the smart contract to acquire the running data of the smart contract. In some embodiments, the running data may include a quantity of times the smart contract has been executed, a quantity of times a specific instruction in the smart contract has been executed, a time taken to execute the smart contract, or any combination thereof. Depending on content (predefined function content) of the interface (for example, the Metrics interface) added during the development of the smart contract, the running data may further include other data. To obtain the running data, the obtaining module 320 may be configured to read, by using a monitoring component, the running data acquired by the interface during the running of the smart contract. The monitoring component may be installed on the blockchain node, and may collect the running data generated during the running of the smart contract.

The transmission module 330 may be configured to transmit the running data to a first analysis component, so that the first analysis component is capable of processing the running data of the smart contract on two or more blockchain nodes to perform at least one operation on the smart contract: running status monitoring or performance analysis. The running status monitoring may be monitoring an execution status of the smart contract according to the running data. The performance analysis may be an evaluation of the smart contract according to the running data. In some embodiments, the first analysis component is disposed outside the blockchain. For example, the analysis component may be an open-source tool such as a Grafana, which can display, monitor, and raise an alarm on Metrics data. In some embodiments, the analysis component may be disposed inside the blockchain platform. For example, the analysis component may be deployed on a blockchain node to which the developer belongs (or referred to as a developer node), on any node in the blockchain platform, or on each node in the blockchain platform.

The execution module 340 may be configured to process the running data of the smart contract to implement the foregoing at least one operation. When the analysis component is deployed inside the blockchain platform, the analysis component may also be referred to as the execution module 340. The execution module 340 may directly process the running data without the need to transfer the data out of the blockchain platform.

It should be understood that the system and the modules thereof shown in FIG. 3 may be implemented in various manners. For example, in some embodiments, the system and the modules may be implemented by hardware, software, or a combination of software and hardware. The hardware part can be implemented by using dedicated logic; and the software part can be stored in a memory and executed by an appropriate instruction execution system such as a microprocessor or dedicated design hardware. A person skilled in the art may understand that the foregoing method and system may be implemented by using computer-executable instructions and/or included in processor control code, and such code is provided by, for example, a carrier media such as a disk, a CD or a DVD-ROM, a programmable memory such as a read-only memory (firmware), or a data carrier such as an optical or electronic signal carrier. The system and the modules thereof in this specification can be implemented by a hardware circuit such as a very large-scale integrated circuit or a gate array, a semiconductor such as a logic chip or a transistor, or a hardware circuit of a programmable hardware device such as a field programmable gate array or a programmable logic device, or can be implemented by software executed by various types of processors, or can be implemented by a combination of the foregoing hardware circuit and software (for example, firmware).

It should be noted that the foregoing description of candidate item display and determining the system and the modules thereof is merely for ease of description, and should not limit this specification to the scope of the embodiments listed. It may be understood that, for a person skilled in the art, after learning a principle of the system, the modules may be randomly combined, or a subsystem may be formed to connect to other modules, without departing from this principle. For example, the modules may share a storage module, or the modules may have respective storage modules. Such variants all fall within the protection scope of this specification.

The embodiments of this application may have beneficial effects including but not limited to: (1) Running data of a smart contract is obtained by adding a Metrics-related interface to the smart contract, and the running data is processed to perform running status monitoring and performance analysis on the smart contract. In this way, internal performance of the contract and an online execution status of the contract after deployment can be monitored, so that a data basis is provided for the performance analysis of the smart contract, thereby helping a developer optimize the smart contract. (2) The obtained running data of the contract is transmitted to a remote component, so that the remote component can process the running data of the smart contract on two or more blockchain nodes to perform running status monitoring and performance analysis on the smart contract. Therefore, a storage space can be saved in a blockchain when the smart contract is monitored in real time. It should be noted that different embodiments may have different beneficial effects. The different embodiments may have any one or a combination of the foregoing beneficial effects, or any other beneficial effects that may be obtained.

The basic concepts have been described above. Obviously, for a person skilled in the art, the above detailed disclosure is only an example, and does not constitute a limitation on this specification. Although it is not explicitly stated herein, a person skilled in the art may make various modifications, improvements, and amendments to this specification. Such modifications, improvements, and amendments are suggested in this specification. Therefore, such modifications, improvements, and amendments still belong to the spirit and scope of the exemplary embodiments of this specification.

Meanwhile, this specification uses specific words to describe the embodiments of this specification. For example, "one embodiment", "an embodiment", and/or "some embodiments" means a specific feature, structure or characteristic related to at least one embodiment of this specification. Therefore, it should be emphasized and noted that "an embodiment" or "one embodiment" or "an alternative embodiment" mentioned twice or more in different positions in this specification does not necessarily refer to the same embodiment. In addition, some features, structures, or characteristics in one or more embodiments of this specification can be appropriately combined.

In addition, a person skilled in the art may understand that the various aspects of this specification can be explained and described through several patentable categories or cases, including any new and useful process, machine, product or a combination of substances, or any new and useful improvement to the various aspects. Correspondingly, various aspects of this specification may be entirely executed by hardware, may be entirely executed by software (including firmware, resident software, microcode, and the like), or may be executed by a combination of hardware and software. The foregoing hardware or software may be referred to as "a data block", "a module", "an engine", "a unit", "a component" or "a system". In addition, various aspects of this specification may be embodied as computer products located in one or more computer-readable media, the product including computer-readable program code.

A computer storage medium may include a propagated data signal including computer program code, for example, on a baseband or as a part of a carrier. The propagated data signal may be represented in a plurality of forms, for example, in an electromagnetic form, in an optical form, or in a form of an appropriate combination. The computer storage medium may be any computer-readable medium other than the computer-readable storage medium. The medium may be connected to an instruction execution system, apparatus or device to implement communication, propagation, or transmission of a program for use. Program code on the computer storage medium may be transmitted through any appropriate medium, including radio, a cable, a fiber optic cable, RF, a similar medium, or any combination of the above media.

Computer program code required for operations of each part of this specification may be written in any one or more programming languages, including object-oriented programming languages such as Java, Scala, Smalltalk, Eiffel, JADE, Emerald, C++, C#, VB.NET, and Python, conventional programmatic programming languages such as a C language, Visual Basic, Fortran 2003, Perl, COBOL 2002, PHP, and ABAP, and dynamic programming languages such as Python, Ruby, and Groovy, or other programming languages. The program code may be completely run on a user computer, or run as an independent software package on a user computer, or partially run on a user computer and partially run on a remote computer, or completely run on a remote computer or server. In the latter case, the remote computer may be connected to the user computer through any network form, for example, a LAN or a WAN, or connected to an external computer (for example, through the Internet), or in a cloud computing environment, or used as a service such as Software as a Service (SaaS).

In addition, unless explicitly stated in the claims, an order of the processing elements and sequences, the use of numbers and letters, or the use of other names in this specification are not intended to limit the order of the processes and methods of this specification. Although some embodiments of the invention that are currently considered useful have been discussed in the foregoing disclosure by using various examples, it should be understood that such details are only for illustrative purposes, and the appended claims are not limited to the disclosed embodiments. On the contrary, the claims are intended to cover all amendments and equivalent combinations that conform to the essence and scope of the embodiments of this specification. For example, although the system component described above may be implemented by a hardware device, the system component may alternatively be implemented only by software solutions, such as installing the described system on an existing server or mobile device.

Similarly, it should be noted that to simplify the expressions disclosed in this specification and help the understanding of one or more embodiments of the invention, in the foregoing descriptions of the embodiments of this specification, a plurality of features are sometimes combined into one embodiment, accompanying drawings, or description thereof. However, this method of disclosure does not mean that a subject of this specification requires more features than those mentioned in the claims. Actually, the features of the embodiments are less than all the features of the single embodiment disclosed above.

In some embodiments, numbers describing quantities of components and attributes are used. It should be understood that such numbers used for describing the embodiments are modified by a modifier "about", "approximately", or "substantially" in some examples. Unless otherwise stated, "about", "approximately", or "substantially" indicates that the number is allowed to vary by ±20%. Correspondingly, in some embodiments, numerical parameters used in the specification and claims are approximate values, and the approximate values may be changed according to a required characteristic of an individual embodiment. In some embodiments, for the numerical parameter, a specified significant digit should be considered, and a method of general digit retention is adopted. Although numerical ranges and parameters used for determining a breadth of the scope of some embodiments of this specification are approximate values, in a specific embodiment, such numerical values are set as accurately as possible within a feasible range.

Finally, it should be understood that the embodiments described in this specification are used only to illustrate principles of the embodiments of this specification. Other variants may also fall within the scope of this specification. Therefore, by way of example and not limitation, alternative configurations of the embodiments of this specification can be regarded as consistent with the teachings of this specification. Correspondingly, the embodiments of this specification are not limited to the embodiments explicitly introduced and described in this specification.

## Claims

1. A method (200) for monitoring a blockchain smart contract, comprising:
running (202) a smart contract deployed on a blockchain node, the smart contract comprising an interface used for acquiring running data;
obtaining (204) running data acquired by the interface during the running of the smart contract, wherein the running data comprises at least one of the following: a quantity of times the smart contract has been executed, a quantity of times a specific instruction in the smart contract has been executed, and a time taken to execute the smart contract;
transmitting the running data to an analysis component disposed outside the blockch ain;
processing, by the analysis component, the running data of the smart contract on two or more blockchain nodes; and
performing (206) at least one of the following operations on the smart contract: running status monitoring or performance analysis.

2. The method according to claim 1, wherein the interface comprised in the deployed smart contract and used for acquiring the running data is written into the smart contract during a development process.

3. The method according to claim 2, wherein a statement for invoking the interface is added before and/or after a statement that needs the smart contract corresponding to a monitoring status.

4. The method according to claim 1, wherein the running a smart contract deployed on a blockchain node comprises:
invoking, when the smart contract is executed in a virtual machine, and the interface comprised in the deployed smart contract and used for acquiring the running data is executed in the virtual machine, blockchain platform code and/or a library function corresponding to the interface in the virtual machine.

5. The method according to claim 1, wherein the interface comprises at least a Metrics interface for monitoring indicators.

6. The method according to claim 1, wherein the obtaining running data acquired by the interface during the running of the smart contract comprises:
reading the running data acquired by the interface during the running of the smart contract by using a monitoring component, the monitoring component being constructed based on a Prometheus protocol.

7. A system (300) for monitoring a blockchain smart contract, comprising:
a running module (310), configured to run a smart contract deployed on a blockchain node, the smart contract comprising an interface used for acquiring running data, wherein the running data comprises at least one of the following: a quantity of times the smart contract has been executed, a quantity of times a specific instruction in the smart contract has been executed, and a time taken to execute the smart contract;
an obtaining module (320), configured to obtain running data acquired by the interface during the running of the smart contract; and
a transmission module (330), configured to transmit the running data to an analysis component disposed outside the blockchain, so that the analysis component processes the running data of the smart contract on two or more blockchain nodes and performs at least one of the following operations on the smart contract: running status monitoring or performance analysis.

8. The system according to claim 7, wherein the interface comprised in the deployed smart contract and used for acquiring the running data is written into the smart contract during a development process.

9. The system according to claim 8, wherein a statement for invoking the interface is added before and/or after a statement that needs the smart contract corresponding to a monitoring status.

10. The system according to claim 7, wherein in order to run the smart contract deployed on the blockchain node, the running module is configured to:
invoke, when the smart contract is executed in a virtual machine, and the interface, comprised in the deployed smart contract and used for acquiring the running data is executed in the virtual machine, blockchain platform code and/or a library function corresponding to the interface in the virtual machine.

## Patentansprüche

1. Verfahren (200) zum Überwachen eines Blockchain-Smart Contracts, umfassend:
Ausführen (202) eines Smart Contracts, der auf einem Blockchain-Knoten eingesetzt wird, wobei der Smart Contract eine Schnittstelle umfasst, die zum Erfassen von Ausführungsdaten verwendet wird;
Erhalten (204) von Ausführungsdaten, die durch die Schnittstelle während des Ausführens des Smart Contracts erfasst werden, wobei die Ausführungsdaten mindestens eines der Folgenden umfassen: eine Anzahl von Malen, die der Smart Contract ausgeführt wurde, eine Anzahl von Malen, die ein spezifischer Befehl in dem Smart Contract ausgeführt wurde, und eine Zeit, die zum Ausführen des Smart Contracts benötigt wird;
Übertragen der Ausführungsdaten an eine Analysekomponente, die außerhalb der Blockchain angeordnet ist;
Verarbeiten, durch die Analysekomponente, der Ausführungsdaten des Smart Contracts auf zwei oder mehr Blockchain-Knoten; und
Durchführen (206) mindestens einer der folgenden Operationen an dem Smart Contract: Ausführungsstatusüberwachung oder Leistungsanalyse.

2. Verfahren nach Anspruch 1, wobei die Schnittstelle, die in dem eingesetzten Smart Contract enthalten ist und zum Erfassen der Ausführungsdaten verwendet wird, während eines Entwicklungsprozesses in den Smart Contract geschrieben wird.

3. Verfahren nach Anspruch 2, wobei eine Anweisung zum Aufrufen der Schnittstelle vor und/oder nach einer Anweisung hinzugefügt wird, die erfordert, dass der Smart Contract einem Überwachungsstatus entspricht.

4. Verfahren nach Anspruch 1, wobei das Ausführen eines Smart Contracts, der auf einem Blockchain-Knoten eingesetzt wird, umfasst:
Aufrufen, wenn der Smart Contract in einer virtuellen Maschine ausgeführt wird und die Schnittstelle, die in dem eingesetzten Smart Contract enthalten ist und zum Erfassen der Ausführungsdaten verwendet wird, in der virtuellen Maschine ausgeführt wird, von Blockchain-Plattformcode und/oder einer Bibliotheksfunktion, die der Schnittstelle in der virtuellen Maschine entspricht.

5. Verfahren nach Anspruch 1, wobei die Schnittstelle mindestens eine Metrik-Schnittstelle zum Überwachen von Indikatoren umfasst.

6. Verfahren nach Anspruch 1, wobei das Erhalten von Ausführungsdaten, die durch die Schnittstelle während des Ausführens des Smart Contracts erfasst werden, umfasst:
Lesen der Ausführungsdaten, die durch die Schnittstelle während des Ausführens des Smart Contracts erfasst werden, unter Verwendung einer Überwachungskomponente, wobei die Überwachungskomponente basierend auf einem Prometheus-Protokoll konstruiert ist.

7. System (300) zum Überwachen eines Blockchain-Smart Contracts, umfassend:
ein Ausführungsmodul (310), das eingerichtet ist, einen Smart Contract auszuführen, der auf einem Blockchain-Knoten eingesetzt wird, wobei der Smart Contract eine Schnittstelle umfasst, die zum Erfassen von Ausführungsdaten verwendet wird, wobei die Ausführungsdaten mindestens eines der Folgenden umfassen: eine Anzahl von Malen, die der Smart Contract ausgeführt wurde, eine Anzahl von Malen, die ein spezifischer Befehl in dem Smart Contract ausgeführt wurde, und eine Zeit, die zum Ausführen des Smart Contracts benötigt wird;
ein Erhaltungsmodul (320), das eingerichtet ist, Ausführungsdaten zu erhalten, die durch die Schnittstelle während des Ausführens des Smart Contracts erfasst werden; und
ein Übertragungsmodul (330), das eingerichtet ist, die Ausführungsdaten an eine Analysekomponente zu übertragen, die außerhalb der Blockchain angeordnet ist, so dass die Analysekomponente die Ausführungsdaten des Smart Contracts auf zwei oder mehr Blockchain-Knoten verarbeitet und mindestens eine der folgenden Operationen an dem Smart Contract durchführt: Ausführungsstatusüberwachung oder Leistungsanalyse.

8. System nach Anspruch 7, wobei die Schnittstelle, die in dem eingesetzten Smart Contract enthalten ist und zum Erfassen der Ausführungsdaten verwendet wird, während eines Entwicklungsprozesses in den Smart Contract geschrieben wird.

9. System nach Anspruch 8, wobei eine Anweisung zum Aufrufen der Schnittstelle vor und/oder nach einer Anweisung hinzugefügt wird, die erfordert, dass der Smart Contract einem Überwachungsstatus entspricht.

10. System nach Anspruch 7, wobei, um den Smart Contract auszuführen, der auf dem Blockchain-Knoten eingesetzt wird, das Ausführungsmodul eingerichtet ist zum:
Aufrufen, wenn der Smart Contract in einer virtuellen Maschine ausgeführt wird und die Schnittstelle, die in dem eingesetzten Smart Contract enthalten ist und zum Erfassen der Ausführungsdaten verwendet wird, in der virtuellen Maschine ausgeführt wird, von Blockchain-Plattformcode und/oder einer Bibliotheksfunktion, die der Schnittstelle in der virtuellen Maschine entspricht.

## Revendications

1. Procédé (200) de surveillance d'un contrat intelligent de chaîne de blocs, comprenant :
l'exécution (202) d'un contrat intelligent déployé sur un noeud de chaîne de blocs, le contrat intelligent comprenant une interface utilisée pour acquérir des données d'exécution ;
l'obtention (204) de données d'exécution acquises par l'interface pendant l'exécution du contrat intelligent, dans lequel les données d'exécution comprennent au moins l'un des éléments suivants : une quantité de fois que le contrat intelligent a été exécuté, une quantité de fois qu'une instruction spécifique dans le contrat intelligent a été exécutée, et un temps pris pour exécuter le contrat intelligent ;
la transmission des données d'exécution à un composant d'analyse disposé à l'extérieur de la chaîne de blocs ;
le traitement, par le composant d'analyse, des données d'exécution du contrat intelligent sur deux noeuds de chaîne de blocs ou plus ; et
la réalisation (206) d'au moins l'une des opérations suivantes sur le contrat intelligent : la surveillance d'état d'exécution ou l'analyse de performance.

2. Procédé selon la revendication 1, dans lequel l'interface comprise dans le contrat intelligent déployé et utilisée pour acquérir les données d'exécution est écrite dans le contrat intelligent durant un processus de développement.

3. Procédé selon la revendication 2, dans lequel une instruction pour invoquer l'interface est ajoutée avant et/ou après une instruction qui a besoin du contrat intelligent correspondant à un état de surveillance.

4. Procédé selon la revendication 1, dans lequel l'exécution d'un contrat intelligent déployé sur un noeud de chaîne de blocs comprend :
l'invocation, lorsque le contrat intelligent est exécuté dans une machine virtuelle, et que l'interface comprise dans le contrat intelligent déployé et utilisée pour acquérir les données d'exécution est exécutée dans la machine virtuelle, d'un code de plate-forme de chaîne de blocs et/ou d'une fonction de bibliothèque correspondant à l'interface dans la machine virtuelle.

5. Procédé selon la revendication 1, dans lequel l'interface comprend au moins une interface de mesure pour surveiller des indicateurs.

6. Procédé selon la revendication 1, dans lequel l'obtention de données d'exécution acquises par l'interface durant l'exécution du contrat intelligent comprend :
la lecture des données d'exécution acquises par l'interface durant l'exécution du contrat intelligent en utilisant un composant de surveillance, le composant de surveillance étant construit sur la base d'un protocole Prometheus.

7. Système (300) de surveillance d'un contrat intelligent de chaîne de blocs, comprenant :
un module d'exécution (310), configuré pour exécuter un contrat intelligent déployé sur un noeud de chaîne de blocs, le contrat intelligent comprenant une interface utilisée pour acquérir des données d'exécution, dans lequel les données d'exécution comprennent au moins l'un des éléments suivants : une quantité de fois que le contrat intelligent a été exécuté, une quantité de fois qu'une instruction spécifique dans le contrat intelligent a été exécutée, et un temps pris pour exécuter le contrat intelligent ;
un module d'obtention (320), configuré pour obtenir des données d'exécution acquises par l'interface durant l'exécution du contrat intelligent ; et
un module de transmission (330), configuré pour transmettre les données d'exécution à un composant d'analyse disposé à l'extérieur de la chaîne de blocs, de sorte que le composant d'analyse traite les données d'exécution du contrat intelligent sur deux noeuds de chaîne de blocs ou plus et réalise au moins l'une des opérations suivantes sur le contrat intelligent : la surveillance d'état d'exécution ou l'analyse de performance.

8. Système selon la revendication 7, dans lequel l'interface comprise dans le contrat intelligent déployé et utilisée pour acquérir les données d'exécution est écrite dans le contrat intelligent durant un processus de développement.

9. Système selon la revendication 8, dans lequel une instruction pour invoquer l'interface est ajoutée avant et/ou après une instruction qui a besoin du contrat intelligent correspondant à un état de surveillance.

10. Système selon la revendication 7, dans lequel afin d'exécuter le contrat intelligent déployé sur le noeud de chaîne de blocs, le module d'exécution est configuré pour :
invoquer, lorsque le contrat intelligent est exécuté dans une machine virtuelle, et que l'interface, comprise dans le contrat intelligent déployé et utilisée pour acquérir les données d'exécution est exécutée dans la machine virtuelle, un code de plate-forme de chaîne de blocs et/ou une fonction de bibliothèque correspondant à l'interface dans la machine virtuelle.
